(19)

**Europäisches Patentamt**
**European Patent Office**
**Office européen des brevets**

(11) **EP 4 528 678 A1**

(12) **EUROPEAN PATENT APPLICATION**
published in accordance with Art. 153(4) EPC

(43) Date of publication:
26.03.2025 Bulletin 2025/13

(21) Application number: 23806528.8

(22) Date of filing: 08.02.2023

(51) International Patent Classification (IPC):
*G06V 20/58* (2022.01)     *G06V 20/64* (2022.01)
*G06V 10/80* (2022.01)     *G06T 7/73* (2017.01)

(86) International application number:
PCT/CN2023/074861

(87) International publication number:
WO 2023/221566 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.05.2022 CN 202210544237

(71) Applicant: Beijing Horizon Robotics Technology
Research and
Development Co., Ltd.
Beijing 100094 (CN)

(72) Inventors:
• LI, Xiangyu
Beijing 100094 (CN)
• ZHU, Hongmei
Beijing 100094 (CN)
• ZHANG, Qian
Beijing 100094 (CN)
• REN, Weiqiang
Beijing 100094 (CN)

(74) Representative: v. Bezold & Partner
Patentanwälte - PartG mbB
Ridlerstraße 57
80339 München (DE)

(54) **3D TARGET DETECTION METHOD AND APPARATUS BASED ON MULTI-VIEW FUSION**

(57) Disclosed in embodiments of the present disclosure are a three-dimensional (3D) target detection method and apparatus based on multi-view fusion. **In** the method, feature extraction is performed on at least one image of a multi-camera view captured by a multi-camera system; the extracted feature data comprising a feature of a target object in a multi-camera view space is mapped to a same bird's-eye view space based on internal parameters and vehicle parameters of the multi-camera system so as to obtain respective feature data corresponding to the at least one image in the bird's-eye view space; a bird's-eye view fusion feature is obtained by means of feature fusion; and target prediction is performed on the target object of the bird's-eye view fusion feature to obtain 3D spatial information of the target object. When 3D target detection based on multi-view fusion is performed in the solution of the embodiments of the present disclosure, multi-view feature fusion is first performed, 3D target detection is then performed, 3D detection for a scene object under a bird's-eye view is completed end-to-end, such that the detection efficiency is improved.

```
                                                              S301
  ┌──────────────────────────────────────────┐
  │ Acquiring at least one image captured from │
  │ a multi-camera view                        │
  └──────────────────────────────────────────┘
                         │                        S302
  ┌──────────────────────────────────────────┐
  │ Performing feature extraction on the at    │
  │ least one image to obtain respective       │
  │ feature data corresponding to the at least │
  │ one image in a multi-camera view space,    │
  │ wherein the feature data comprises a       │
  │ feature of a target object                 │
  └──────────────────────────────────────────┘
                         │                        S303
  ┌──────────────────────────────────────────┐
  │ Mapping, based on internal parameters and  │
  │ vehicle parameters of a multi-camera       │
  │ system, the respective feature data        │
  │ corresponding to the at least one image in │
  │ the multi-camera view space to a same      │
  │ bird's-eye view space so as to obtain      │
  │ respective feature data corresponding to   │
  │ the at least one image in the bird's-eye   │
  │ view space                                 │
  └──────────────────────────────────────────┘
                         │                        S304
  ┌──────────────────────────────────────────┐
  │ Performing feature fusion on the respective │
  │ feature data corresponding to the at least │
  │ one image in the bird's-eye view space to  │
  │ obtain a bird's-eye view fusion feature    │
  └──────────────────────────────────────────┘
                         │                        S305
  ┌──────────────────────────────────────────┐
  │ Performing target prediction on the target │
  │ object of the bird's-eye view fusion       │
  │ feature to obtain 3D spatial information of │
  │ the target object                          │
  └──────────────────────────────────────────┘
```

**FIG.3**

EP 4 528 678 A1

**Description**

**CROSS-REFERENCE TO RELATED APPLICATION**

The present disclosure claims priority to Chinese Patent Application No. 202210544237.0, filed on May 18, 2022, entitled "3D Target Detection Method and Apparatus Based on Multi-view Fusion", which is incorporated herein by reference in its entirety.

**FIELD OF THE PRESENT DISCLOSURE**

The present disclosure relates to the field of computer vision, and in particular to a 3D target detection method and apparatus based on multi-view fusion.

**BACKGROUND OF THE PRESENT DISCLOSURE**

With the development of science and technology, automatic driving technology is more and more widely used in people's daily lives. An automatic driving carrier may perform 3D detection on a target object (a vehicle, a pedestrian, a cyclist, etc.) within a certain distance around to obtain 3D spatial information of the target object. Based on the 3D spatial information of the target object, distance measurement and velocity measurement may be performed on the target object to achieve better driving control.

At present, the automatic driving carrier may capture a plurality of images with different views, then perform 3D detection on respective images separately, and finally fuse the 3D detection results of the various images to generate 3D spatial information of the target object around the carrier.

**SUMMARY OF THE PRESENT DISCLOSURE**

According to the existing technical solution, it is required to perform 3D detection on each image captured by an automatic driving carrier, and then perform fusion on the 3D detection results of respective images to acquire information about other vehicles in an environmental range of 360 degrees around the carrier, resulting in a low detection efficiency.

In order to solve the above technical problem, the present disclosure has been made. In embodiments of the present disclosure there are provided a 3D target detection method and an apparatus based on multi-view fusion.

According to one aspect of the present disclosure, a 3D target detection method based on multi-view fusion is provided, the method including:

acquiring at least one image captured from a multi-camera view;
performing feature extraction on the at least one image to obtain respective feature data corresponding to the at least one image in a multi-camera view space, wherein the feature data comprises a feature of a target object;
mapping, based on internal parameters and vehicle parameters of a multi-camera system, the respective feature data corresponding to the at least one image in the multi-camera view space to a same bird's-eye view space so as to obtain respective feature data corresponding to the at least one image in the bird's-eye view space;
performing feature fusion on the respective feature data corresponding to the at least one image in the bird's-eye view space to obtain a bird's-eye view fusion feature; and
performing target prediction on the target object of the bird's-eye view fusion feature to obtain 3D spatial information of the target object.

According to another aspect of the present disclosure, a 3D target detection apparatus based on multi-view fusion is provided, the apparatus including:

an image receiving module configured to acquire at least one image captured from a multi-camera view;
a feature extraction module configured to perform feature extraction on the at least one image acquired by the image receiving module to obtain respective feature data corresponding to the at least one image in a multi-camera view space, wherein the feature data comprises a feature of a target object;
an image feature mapping module configured to map, based on internal parameters and vehicle parameters of a multi-camera system, the respective feature data corresponding to the at least one image in the multi-camera view space obtained by the feature extraction module to a same bird's-eye view space so as to obtain respective feature data corresponding to the at least one image in the bird's-eye view space;
an image fusion module configured to perform feature fusion on the respective feature data corresponding to the at least one image in the bird's-eye view space obtained by the image feature mapping module to obtain a bird's-eye view fusion feature;
a 3D detection module configured to perform target prediction on the target object of the bird's-eye view fusion feature obtained by the image fusion module to obtain 3D spatial information of the target object.

According to yet another aspect of the present disclosure, a computer-readable storage medium storing a computer program thereon for executing the above-mentioned 3D target detection method based on multi-view fusion is provided.

According to yet still another aspect of the present disclosure, an electronic device is provided, the device including:

a processor;
a memory for storing the processor-executable instruction;
wherein the processor is configured to read the executable instruction from the memory and execute the instruction to implement the 3D target detection method based on multi-view fusion described above.

According to a 3D target detection method and apparatus based on multi-view fusion provided in the above-mentioned embodiments of the present disclosure, feature extraction is performed on at least one image of a multi-camera view captured by a multi-camera system; the extracted feature data including a feature of a target object in a multi-camera view space is mapped to a same bird's-eye view space based on internal parameters of the multi-camera system so as to obtain respective feature data corresponding to the at least one image in the bird's-eye view space; and the respective feature data corresponding to the at least one image in the bird's-eye view space is performed feature fusion to obtain a bird's-eye view fusion feature. Then, target prediction is performed on the target object of the bird's-eye view fusion feature to obtain 3D spatial information of the target object. When 3D target detection based on multi-view fusion is performed by means of the solution of the embodiments of the present disclosure, multi-view feature fusion is first performed, 3D target detection is then performed, 3D target detection for a scene object under a bird's-eye view is completed end-to-end, thereby avoiding a post-processing stage on conventional multi-view 3D detection and improving detection efficiency.

## BRIEF DESCRIPTION OF THE DRAWINGS

The above and other objectives, features and advantages of the present disclosure will become more apparent by describing embodiments of the present disclosure in detail in combination with the accompanying drawings. The accompanying drawings, which are included to provide a further understanding of the embodiments of the present disclosure and constitute a part of this specification, illustrate the present disclosure together with the embodiments of the present disclosure without limiting the present disclosure. Throughout the drawings, like reference numerals generally refer to like parts or steps.

FIG. 1 is a scene diagram to which the present disclosure is applicable.
FIG. 2 is a system block diagram showing a vehicle-mounted automatic driving system according to an embodiment of the present disclosure.
FIG. 3 is a flow chart of a 3D target detection method based on multi-view fusion according to an example embodiment of the present disclosure.
FIG. 4 is a schematic block diagram showing a multi-camera system capturing images according to an example embodiment of the present disclosure.
FIG. 5 is a schematic diagram showing images from multi-camera view according to an example embodiment of the present disclosure.
FIG. 6 is a schematic block diagram showing feature extraction according to an example embodiment of the present disclosure.
FIG. 7 is a schematic diagram showing generating a bird's-eye view image from an image captured by a multi-camera system according to an example embodiment of the present disclosure.
FIG. 8 is a schematic block diagram showing target detection according to an example embodiment of the present disclosure.
FIG. 9 is a flow chart of determining feature data in a bird's-eye view space according to an example embodiment of the present disclosure.
FIG. 10 is a schematic block diagram showing performing steps S303 and S304 according to an example embodiment of the present disclosure.
FIG. 11 is a flow chart of target detection according to an example embodiment of the present disclosure.
FIG. 12 is a schematic diagram showing output of a predictive network according to an example embodiment of the present disclosure.

FIG. 13 is another flow diagram showing target detection according to an example embodiment of the present disclosure.

FIG. 14 is a schematic diagram showing a Gaussian kernel according to an example embodiment of the present disclosure.

FIG. 15 is a schematic diagram showing a heat map according to an example embodiment of the present disclosure.

FIG. 16 is yet another flow chart of target detection according to an example embodiment of the present disclosure.

FIG. 17 is a structural diagram showing a 3D target detection apparatus based on multi-view fusion according to an example embodiment of the present disclosure.

FIG. 18 is another structural diagram showing a 3D target detection apparatus based on multi-view fusion according to an example embodiment of the present disclosure.

FIG. 19 is a structural block diagram showing an electronic device according to an example embodiment of the present disclosure.

## DESCRIPTION OF THE EMBODIMENTS

Hereinafter, example embodiments according to the present disclosure will be described in detail with reference to the accompanying drawings. It is to be understood that the described embodiments are merely a few of the embodiments of the present disclosure and not all of the embodiments of the present disclosure, and that the present disclosure is not to be limited to the example embodiments described herein.

Application Overview

To ensure safety during automatic driving process, the automatic driving carrier may perform real-time detection on target objects within a certain distance around the carrier (e.g., a vehicle, a pedestrian, a cyclist, etc.) so as to obtain 3D spatial information about a 3D target object (for example, properties such as location, dimension, orientation angle and category, etc. ). Based on the 3D spatial information of the target object, distance measurement and velocity measurement may be performed on the target object to achieve better driving control. The automatic driving carrier may be a vehicle, an airplane, or the like.

The automatic driving carrier may capture a plurality of images from different views using a multi-camera system, and then perform 3D target detection on each image, such as filtering and de-duplication of target objects on a plurality of images captured by multi-view cameras from different views. Finally, 3D detection results of respective images are fused to generate 3D spatial information of the target object around the carrier. It may be seen that according to the existing technical solution, it is required to perform 3D detection on each image captured by an automatic driving carrier, and then perform fusion on the 3D detection results of respective images to result in a low detection efficiency.

In view of the above, embodiments of the present disclosure provide a 3D target detection method and apparatus based on multi-view fusion. When performing 3D target detection according to the solution of the present disclosure, an automatic driving carrier may perform feature extraction on at least one image captured by a multi-camera system from multi-camera views to obtain feature data comprising a feature of a target object in a multi-camera view space. In addition, the feature data in the multi-camera view space is mapped to a same bird's-eye view space based on internal parameters and vehicle parameters of a multi-camera system so as to obtain feature data corresponding to the at least one image in the bird's-eye view space. Then feature fusion is performed on the feature data corresponding to the at least one image in the bird's-eye view space to obtain a bird's-eye view fusion feature; target prediction is performed on the target object in the bird's-eye view fusion feature to obtain 3D spatial information of the target object around the carrier.

According to the solution of the embodiments of the present disclosure, when 3D target detection based on multi-view fusion is performed, feature data of at least one image from a multi-camera view is mapped to the same bird's-eye view space at the same time, so that more reasonable and better fusion may be performed. At the same time, the 3D spatial information of each target object in the vehicle-mounted environment is directly detected in the bird's-eye view space by the fused bird's-eye view fusion feature. Accordingly, when 3D target detection based on multi-view fusion is performed by means of the solution of the embodiments of the present disclosure, multi-view feature fusion is first performed, 3D target detection is then performed, 3D target detection for a scene object under a bird's-eye view is completed end-to-end, thereby avoiding a post-processing stage on conventional multi-view 3D target detection and improving detection efficiency.

Example system

Embodiments of the present disclosure may be applied in application scenes where 3D target detection is required, such as automatic driving application scenes.

For example, in an application scene of automatic driving, a multi-camera system is configured on an automatic driving carrier (hereinafter simply referred to as "carrier"), images from different views are captured by the multi-camera system, and then 3D spatial information of a target object around the carrier is obtained by 3D target detection based on multi-view fusion by means of the solution of the embodiments of the present disclosure.

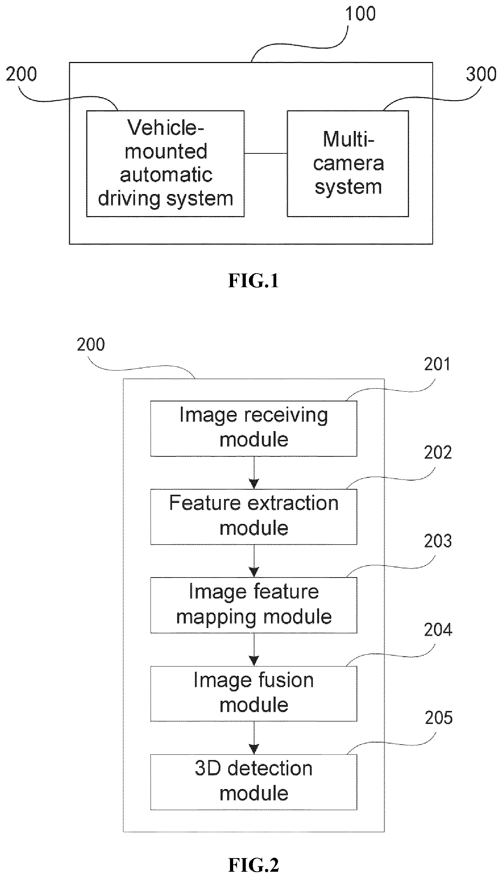

FIG. 1 is a scene diagram to which the present disclosure is applicable.

As shown in FIG. 1, the embodiment of the present disclosure is applied to an application scene of aided driving or automatic driving in which a vehicle-mounted automatic driving system 200 and a multi-camera system 300 are configured on a carrier 100, and the vehicle-mounted automatic driving system 200 and the multi-camera system 300 are electrically connected. The multi-camera system 300 is used for capturing an image around the carrier, and the vehicle-mounted automatic driving system 200 is used for acquiring the image acquired by the multi-camera system 300, and performing 3D target detection based on multi-view fusion to obtain 3D spatial information of a target object around the carrier.

FIG. 2 is a system block diagram showing a vehicle-mounted automatic driving system according to an embodiment of the present disclosure.

As shown in FIG. 2, the vehicle-mounted automatic driving system 200 includes an image receiving module 201, a feature extraction module 202, an image feature mapping module 203, an image fusion module 204, and a 3D detection module 205. The image receiving module 201 is configured to acquire at least one image captured by the multi-camera system 300; the feature extraction module 202 is configured to perform feature extraction on at least one image acquired by the image receiving module 201 to obtain feature data; the image feature mapping module 203 is configured to map feature data of at least one image from a multi-camera view space to the same bird's-eye view space; the image fusion module 204 is configured to perform feature fusion on feature data corresponding to the at least one image in the bird's-eye view space to obtain a bird's-eye view fusion feature; the 3D detection module 205 is configured to perform target prediction on the target object of the bird's-eye view fusion feature obtained by the image fusion module 204, to obtain 3D spatial information of a target object around the carrier.

The multi-camera system 300 includes a plurality of cameras from different views, each camera is used for capturing an environment image from one view, and the plurality of cameras cover an environmental range of 360 degrees around the carrier. Each camera defines an own camera view coordinate system, and a respective camera view space is formed by the respective camera view coordinate system, and an environment image captured by each camera is an image under the corresponding camera view space.

Example method

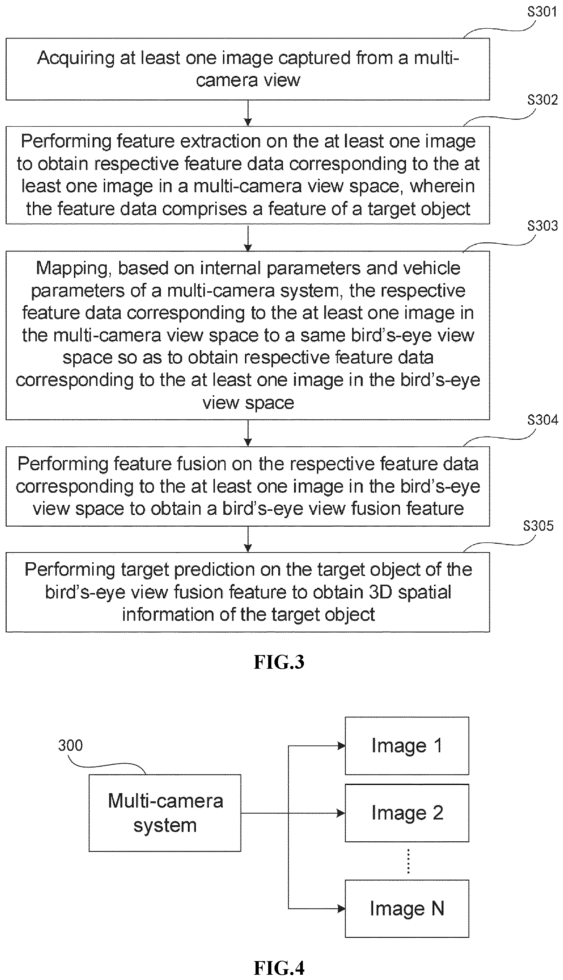

FIG. 3 is a flow chart of a 3D target detection method based on multi-view fusion according to an example embodiment of the present disclosure.

The present embodiment may be applied to a vehicle-mounted automatic driving system 200, as shown in FIG. 3, the following steps are included:

Step S301: Acquiring at least one image captured from a multi-camera view.

The at least one image may be captured by at least one camera of the multi-camera system. Illustratively, the at least one image may be an image captured in real time by the multi-camera system or an image captured in advance by the multi-camera system.

FIG. 4 is a schematic block diagram showing a multi-camera system capturing images according to an example embodiment of the present disclosure.

As shown in FIG. 4, in an embodiment, the multi-camera system may capture a plurality of images, such as images 1, 2 ...... N, from different views in real time, and transmit the captured images to the vehicle-mounted automatic driving system in real time. As such, the image acquired by the vehicle-mounted automatic driving system may characterize the real situation around the carrier at the current moment.

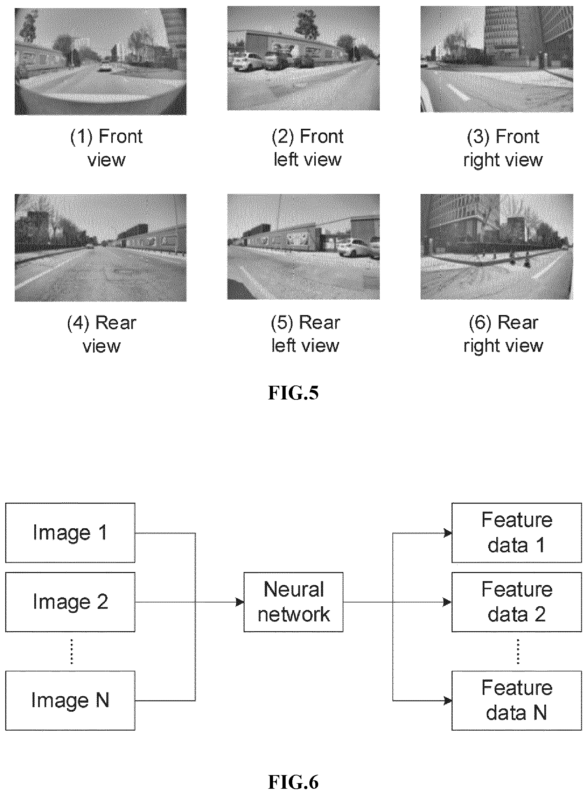

FIG. 5 is a schematic diagram showing images from multi-camera view according to an example embodiment of the present disclosure.

As shown in FIG. 5 (1) through FIG. 5 (6), in an embodiment, the multi-camera system may include 6 cameras. The 6 cameras are respectively arranged at a front-end, a front left-end, a front right-end, a rear-end, a rear left-end and a rear right-end of the carrier. As such, at any time, the multi-camera system may capture images from 6 different views, such as a front view image ($I_{front}$), a front left view image ($I_{frontleft}$), a front right view image ($I_{frontright}$), a rear view image ($I_{rear}$), a rear left view image ($I_{rearleft}$), and a rear right view image ($I_{rearright}$).

Each image includes, but is not limited to, presenting various types of target objects such as roads, traffic lights, road signs, vehicles (minicar, bus, truck, etc.), pedestrians, cyclists, etc. The positions, etc. of the types of the target objects contained in the respective images are different according to the positions, etc. of the types of the target objects around the carrier.

Step S302: Performing feature extraction on the at least one image to obtain respective feature data corresponding to the at least one image in a multi-camera view space, wherein the feature data comprises a feature of a target object.

In an embodiment, the vehicle-mounted automatic driving system may separately extract feature data in a corresponding camera view space from each image. The feature data may include a feature of the target object for describing the target object in the image, the feature of the target object including but not limited to image texture information, edge contour information, semantic information, etc.

The image texture information is used for characterizing an image texture of the target object, the edge contour information is used for characterizing an edge contour of the target object, and the semantic information is used for characterizing a category of the target object. Categories of the target objects include, but are not limited to: roads, traffic lights, road signs, vehicles (minicar, bus, truck, etc.), pedestrians, cyclists, etc.

FIG. 6 is a schematic block diagram showing feature extraction according to an example embodiment of the present disclosure.

As shown in FIG. 6, the vehicle-mounted automatic driving system may perform feature extraction on at least one image (images 1-N) using a neural network to obtain feature data 1-N corresponding to the respective images in a multi-camera view space.

For example, the vehicle-mounted automatic driving system performs feature extraction on a front view image ($I_{front}$), so as to obtain feature data $f_{front}$ of the front view image ($I_{front}$) in a front-end camera view space; performs feature extraction on a front left view image ($I_{frontleft}$), so as to obtain feature data $f_{frontleft}$ of the front left view image ($I_{frontleft}$) under a front left-end camera view space; performs feature extraction on the front right view image ($I_{frontright}$), so as to obtain feature data $f_{frontright}$ of the front right view image ($I_{frontright}$) under the view space of the front right-end camera; performs feature extraction on the rear view image ($I_{rear}$), so as to obtain feature data $f_{rear}$ of the rear view image ($I_{rear}$) in a rear-end camera view space; performs feature extraction on the rear left view image ($I_{rearleft}$), so as to obtain feature data $f_{rearleft}$ of the rear left view image ($I_{rearleft}$) under the view space of the rear left-end camera; performs feature extraction on the rear right view image ($I_{rearright}$), so as to obtain feature data $f_{rearright}$ of the rear right view image ($I_{rearright}$) under the view space of the rear right-end camera.

Step 303: Mapping, based on internal parameters and vehicle parameters of a multi-camera system, the respective feature data corresponding to the at least one image in the multi-camera view space to a same bird's-eye view space so as to obtain respective feature data corresponding to the at least one image in the bird's-eye view space.

The internal parameters of the multi-camera system include internal parameters of a camera and external parameters of a camera of each camera, and the internal parameters of a camera are parameters related to the characteristics of the camera itself, such as a focal length of the camera, a pixel size, etc.; the external parameters of a camera are parameters in the world coordinate system, such as the position of the camera, the direction of rotation, etc. The vehicle parameter refers to a transformation matrix from a Vehicle Coordinate System (VCS) to a bird's-eye view coordinate system (BEV), and the vehicle coordinate system is a coordinate system where a carrier is located.

For example, the vehicle-mounted automatic driving system maps feature data $f_{front}$ of a front view image ($I_{front}$) in a front-end camera view space to the same bird's-eye view space to obtain feature data $F_{front}$ of the front view image ($I_{front}$) in the bird's-eye view space; maps feature data $f_{frontleft}$ of a front left view image ($I_{frontleft}$) in a front left-end camera view space to the same bird's-eye view space to obtain feature data $F_{frontleft}$ of the front left view image ($I_{frontleft}$) in the bird's-eye view space; maps feature data $f_{frontright}$ of a front right view image ($I_{frontright}$) in a front right-end camera view space to the same bird's-eye view space to obtain feature data $F_{frontright}$ of the front right view image ($I_{frontright}$) in the bird's-eye view space; maps feature data $t_{rear}$ of a rear view image ($I_{rear}$) in a rear-end camera view space to the same bird's-eye view space to obtain feature data $F_{rear}$ of the rear view image ($I_{rear}$) in the bird's-eye view space; maps feature data $f_{rearleft}$ of a rear left view image ($I_{rearleft}$) in a rear left-end camera view space to the same bird's-eye view space to obtain feature data $F_{rearleft}$ of the rear left view image ($I_{rearleft}$) in the bird's-eye view space; and maps feature data $f_{rearright}$ of a rear right view image ($I_{rearright}$) in a rear right-end camera view space to the same bird's-eye view space to obtain feature data $F_{rearright}$ of the rear right view image ($I_{rearright}$) in the bird's-eye view space.

Step S304: Performing feature fusion on the respective feature data corresponding to the at least one image in the bird's-eye view space to obtain a bird's-eye view fusion feature.

The bird's-eye view fusion feature is used for characterizing feature data of a target object around the carrier in a bird's-eye view space, and the feature data of the target object in the bird's-eye view space may include, but is not limited to, attributes such as a shape, a size, a category, an orientation angle and a relative position of the target object.

In an embodiment, the vehicle-mounted automatic driving system may perform additive feature fusion on the feature data corresponding to the at least one image in the bird's-eye view space to obtain a bird's-eye view fusion feature. It may be specifically represented by the following formula:

$$F' = \text{Add} \left( \ \sum F_{(front, frontleft, frontright, rear, rearleft, rearright)} \ \right)$$

where F' represents a bird's-eye view fusion feature and Add represents an additive feature fusion calculation performed on respective feature data corresponding to the at least one image in a bird's-eye view space.

It should be noted that the embodiment of step S304 is not limited to this, and for example, feature fusion may be performed on feature data corresponding to images of different camera views in a bird's-eye view space by using multiplication and superposition.

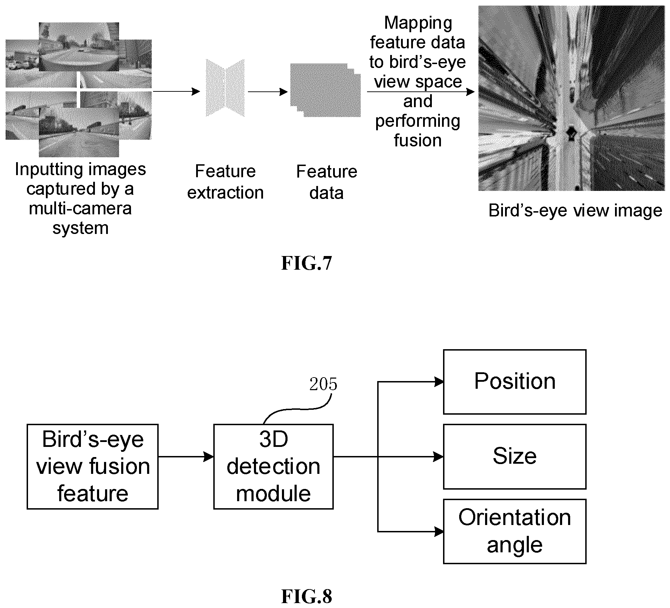

FIG. 7 is a schematic diagram showing generating a bird's-eye view image from an image captured by a multi-camera system according to an example embodiment of the present disclosure.

As shown in FIG. 7, illustratively, the size of the bird's-eye view image may be the same as the size of at least one image captured by the multi-camera system. The bird's-eye view image may embody 3D spatial information of the target object, which includes at least one kind of attribute information of the target object. The attribute information but is not limited to 3D position information (i.e., coordinate information about an X axis, a Y axis and a Z axis), size information (i.e., length, width and height information), orientation angle information, etc.

The coordinate information about the X-axis, the Y-axis and the Z-axis refers to the coordinate position (x, y, z) of the target object in the bird's-eye view space, an origin point of the coordinate system in the bird's-eye view space is located at any position such as a chassis of the carrier or the center of the carrier, the X-axis direction is a direction from the front to the rear, the Y-axis direction is a direction from the left to the right, and the Z-axis direction is a direction vertically up and down. The orientation angle refers to an angle formed by a front direction or a traveling direction of the target object in the bird's-eye view space, for example, when the target object is a traveling pedestrian, the orientation angle refers to an angle formed by the traveling direction of the pedestrian in the bird's-eye view space. When the target object is a stationary vehicle, the orientation angle refers to an angle formed by a head direction of the vehicle in the bird's-eye view space.

It should be noted that the bird's-eye view fusion features of different categories of target objects may be included in the bird's-eye view image since different categories of target objects may be included in at least one image captured by the multi-camera system.

Step S305 : Performing target prediction on the target object of the bird's-eye view fusion feature to obtain 3D spatial information of the target object.

The 3D spatial information may include: at least one of a position, a size, and an orientation angle of the target object in the bird's-eye view coordinate system. The position refers to a coordinate position (x, y, z) of the target object relative to a carrier in the bird's-eye view space, the size refers to height, width, and length of the target object in the bird's-eye view space, and the orientation angle refers to a rotation yaw of the target object in the bird's-eye view space.

FIG. 8 is a schematic block diagram showing target detection according to an example embodiment of the present disclosure.

As shown in FIG. 8, in an embodiment, the vehicle-mounted automatic driving system may perform 3D target prediction on a target object of a bird's-eye view fusion feature using one or more predictive networks to obtain 3D spatial information of each target object around a carrier.

When the vehicle-mounted automatic driving system performs 3D target prediction using a plurality of predictive networks, each predictive network may output one or more attributes of the target object, and different predictive networks may output different attributes.

Accordingly, when 3D target detection based on multi-view fusion is performed by means of the solution of the embodiments of the present disclosure, multi-view feature fusion may be first performed, 3D target detection is then performed, 3D target detection for a scene object under a bird's-eye view is completed end-to-end, thereby avoiding a post-processing stage on conventional multi-view 3D detection and improving detection efficiency.

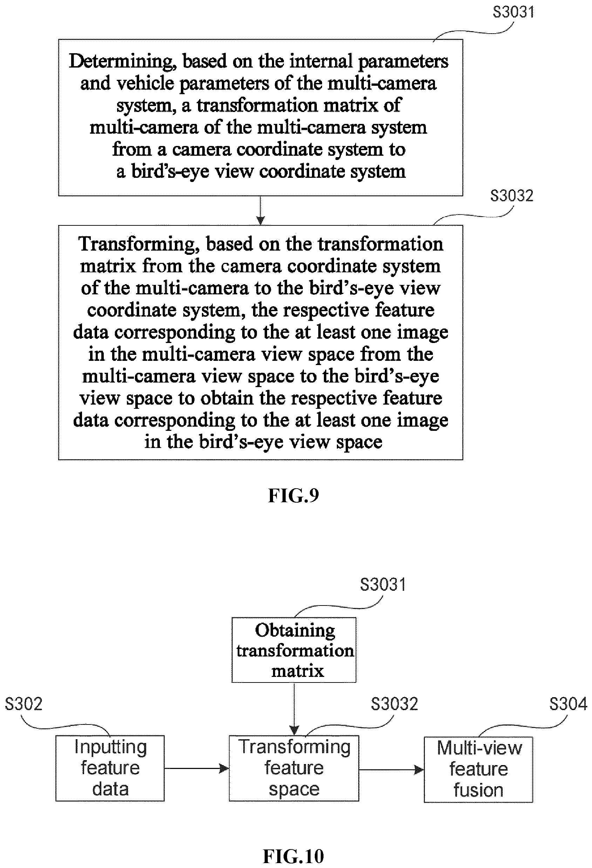

FIG. 9 is a flow chart of determining feature data in a bird's-eye view space according to an example embodiment of the present disclosure.

As shown in FIG. 9, based on the above embodiment shown in FIG. 3, step S303 may include the following steps: Step S3031: Determining, based on the internal parameters and vehicle parameters of the multi-camera system, a transformation matrix of multi-camera of the multi-camera system from a camera coordinate system to a bird's-eye view coordinate system.

The internal parameters of the multi-camera system include internal parameter of a camera and external parameters of a camera of each camera; the external parameters of a camera refer to a transformation matrix from a camera coordinate system of the multi-camera to a vehicle coordinate system; the vehicle parameter refers to a transformation matrix from a Vehicle Coordinate System (VCS) to a bird's-eye view coordinate system (BEV), and the vehicle coordinate system is a coordinate system where a carrier is located.

In a specific embodiment, step S3031 includes:
acquiring internal parameters of a camera and external parameters of a camera of the multi-camera in the multi-camera system, respectively, and acquiring a transformation matrix from a vehicle coordinate system to the bird's-eye view coordinate system; and

Based on the external parameters of the camera and the internal parameters of the camera of the multi-camera, and the transformation matrix from the vehicle coordinate system to the bird's-eye view coordinate system, a transformation matrix from the camera coordinate system of the multi-camera to the bird's-eye view coordinate system is determined.

In an embodiment, the vehicle-mounted automatic driving system may determine a transformation matrix H from the camera coordinate system to the bird's-eye view coordinate system of the multi-camera by the following formula:

$$\mathrm{H} = T_{vcs \to bev} @ T_{camera \to vcs} @ K^{-1};$$

where @ represents matrix multiplication; $T_{camera \to vcs}$ represents a transformation matrix from a camera coordinate system to a vehicle coordinate system, and $T_{camera \to vcs}$ characterizes an external parameter of a camera, ; $T_{vcs \to bev}$ represents a transformation matrix from a vehicle coordinate system to a bird's-eye view coordinate system; and K represents an internal parameter of a camera.

It should be noted that the external parameter of the camera, i.e., the transformation matrix from the camera coordinate system to the vehicle coordinate system, may be obtained by calibration of the multi-camera system and will generally not change once calibration is completed. The transformation matrix from the vehicle coordinate system to the bird's-eye view coordinate system may be calculated from an artificially set range of bird's-eye views (e.g., a range bounded by every 100 meters in the front, rear, left, and right), and a resolution of a bird's-eye view image (e.g., $512 \times 512$).

As such, each camera in the multi-camera system may determine a corresponding transformation matrix. For example, the vehicle-mounted automatic driving system determines a transformation matrix $H_{front \to bev}$ from a camera coordinate system of a front-end camera to a bird's-eye view coordinate system based on the transformation matrix from the camera coordinate system of the front-end camera to the vehicle coordinate system, the transformation matrix from the vehicle coordinate system to the bird's-eye view coordinate system, and internal parameters of a camera of the front-end camera; determines a transformation matrix $H_{frontleft \to bev}$ from a camera coordinate system of a front left-end camera to the bird's-eye view coordinate system based on the transformation matrix from the camera coordinate system of the front left-end camera to the vehicle coordinate system, the transformation matrix from the vehicle coordinate system to the bird's-eye view coordinate system, and the internal parameters of a camera of the front left-end camera; determines a transformation matrix $H_{frontright \to bev}$ from a camera coordinate system of a front right-end camera to the bird's-eye view coordinate system based on a transformation matrix from the camera coordinate system of the front right-end camera to the vehicle coordinate system, a transformation matrix from the vehicle coordinate system to the bird's-eye view coordinate system, and internal parameters of a camera of the front right-end camera; determines a transformation matrix $H_{rear \to bev}$ from a camera coordinate system of a rear-end camera to the bird's-eye view coordinate system based on a transformation matrix from the camera coordinate system of the rear-end camera to the vehicle coordinate system, a transformation matrix from the vehicle coordinate system to the bird's-eye view coordinate system, and internal parameters of a camera of the rear-end camera; determines a transformation matrix $H_{rearleft \to bev}$ from a camera coordinate system of a rear left-end camera to the bird's-eye view coordinate system based on a transformation matrix from the camera coordinate system of the rear left-end camera to the vehicle coordinate system, a transformation matrix from the vehicle coordinate system to the bird's-eye view coordinate system, and internal parameters of a camera of the rear left-end camera; and determines a transformation matrix $H_{rearright \to bev}$ from a camera coordinate system of a rear right-end camera to the bird's-eye view coordinate system based on a transformation matrix from a camera coordinate system of a rear right-end camera to the vehicle coordinate system, a transformation matrix from the vehicle coordinate system to the bird's-eye view coordinate system, and internal parameters of a camera of the rear right-end camera.

In the present embodiment, since each camera has a transformation matrix from its own camera view coordinate system to a bird's-eye view coordinate system, the predictive network used for the 3D target detection in the embodiment of the present application is applicable to a multi-camera system, and it is not required for the predictive network to be trained from the beginning to improve the detection efficiency.

Step S3032: Transforming, based on the transformation matrix from the camera coordinate system of the multi-camera to the bird's-eye view coordinate system, the respective feature data corresponding to the at least one image in the multi-camera view space from the multi-camera view space to the bird's-eye view space to obtain the respective feature data corresponding to the at least one image in the bird's-eye view space.

In an embodiment, the vehicle-mounted automatic driving system may obtain respective feature data corresponding to the at least one image in the bird's-eye view space by matrix multiplication of the transformation matrix of each camera and the feature data in the respective camera view space. It may be specifically represented by the following formula:

$$F = H @ f \ .$$

Where F represents respective feature data $F_{front}$, $F_{frontleft}$, $F_{frontright}$, $F_{rear}$, $F_{rearleft}$, and $F_{rearright}$ corresponding to the at least one image in the bird's-eye view space; H represents respective transformation matrix $H_{front \to bev}$ , $H_{frontleft \to}$

$_{bev}$, $H_{frontright \to bev}$, $H_{rear \to bev}$, $H_{rearleft \to bev}$, and $H_{rearright \to bev}$ corresponding to each camera in a multi-camera system; and $f$ represents feature data $f_{front}$, $f_{frontleft}$, $f_{frontright}$, $f_{rear}$, $f_{rearleft}$, and $f_{rearright}$ of at least one image in a multi-camera view space.

It may be seen that the embodiments of the present disclosure may not only be applicable to different types of multi-camera systems, but also may perform more reasonable feature fusion by calculating respective transformation matrix for different cameras in the multi-camera system, and then mapping respective feature data to a bird's-eye view space based on the respective transformation matrix of respective cameras, and obtaining feature data corresponding to respective images in the bird's-eye view space.

It should be noted that the two steps of step S302 and step S3031 may be performed synchronously or asynchronously, depending on the actual application.

FIG. 10 is a schematic block diagram showing performing steps S303 and S304 according to an example embodiment of the present disclosure.

As shown in FIG. 10, after both steps S302 and S3031 are completed, the feature space transform described in step S3032 is performed based on the transformation matrix from the camera coordinate system of respective cameras to the bird's-eye view coordinate system obtained in step S3031 and the feature data corresponding to the camera view space obtained in step S302, so as to obtain feature data of the bird's-eye view space. Finally, step S304 is executed to perform feature fusion on the feature data from a multi-camera view in the bird's-eye view space to obtain a bird's-eye view fusion feature.

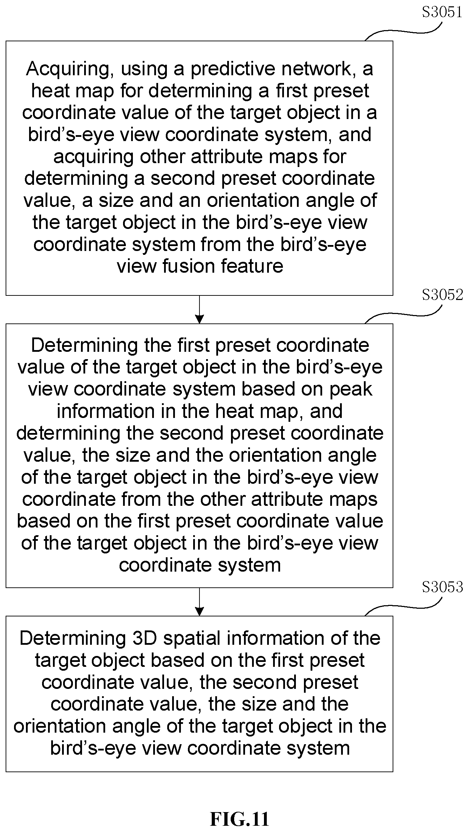

FIG. 11 is a flow chart of target detection according to an example embodiment of the present disclosure.

As shown in FIG. 11, based on the above-mentioned embodiment shown in FIG. 3, step S305 may include the following steps:

Step S3051: Acquiring, using a predictive network, a heat map for determining a first preset coordinate value of the target object in a bird's-eye view coordinate system, and acquiring other attribute maps for determining a second preset coordinate value, a size and an orientation angle of the target object in the bird's-eye view coordinate system from the bird's-eye view fusion feature.

The predictive network may be a neural network for target prediction of the target object. Since 3D spatial information prediction of different attributes needs to perform on the target object, there may also be various predictive network. Different predictive networks are used to predict 3D spatial information of different attributes.

For example, when the attribute to be predicted is a first preset coordinate value of the target object, the bird's-eye view fusion feature in the bird's-eye view image may be processed using a predictive network corresponding to the first preset coordinate value to obtain a heat map, so as to determine the first preset coordinate value of the target object in the bird's-eye view coordinate system using the heat map. The size of the heat map may be the same as the size of the bird's-eye view image.

For another example, when the attribute to be predicted is a second preset coordinate value, size and orientation angle of the target object, the bird's-eye view fusion feature in the bird's-eye view image may be processed using a predictive network corresponding to the second preset coordinate value, the size and the orientation angle to obtain another attribute map, so as to determine the second preset coordinate value, the size and the orientation angle of the target object in the bird's-eye view coordinate system using other attribute maps.

The first preset coordinate value is a (x, y) position in a bird's-eye view coordinate system, the second preset coordinate value is a z position in the bird's-eye view coordinate system, the dimension is length, width and height, and the orientation angle is a rotation yaw.

Step S3052: Determining the first preset coordinate value of the target object in the bird's-eye view coordinate system based on peak information in the heat map, and determining the second preset coordinate value, the size and the orientation angle of the target object in the bird's-eye view coordinate from the other attribute maps based on the first preset coordinate value of the target object in the bird's-eye view coordinate system.

The peak information refers to a central value of a Gaussian kernel, i.e., a central point of the target object.

After predicting the first preset coordinate value of the target object in the bird's-eye view space, since other attribute maps may output the respective attribute information using the attribute output result of the heat map, a second preset coordinate value, a size and an orientation angle of the target object in the bird's-eye view coordinate may be predicted from other attribute maps based on the first preset coordinate value of the target object in the bird's-eye view coordinate system.

Step S3053: Determining 3D spatial information of the target object based on the first preset coordinate value, the second preset coordinate value, the size and the orientation angle of the target object in the bird's-eye view coordinate system.

In an embodiment, the vehicle-mounted automatic driving system may determine the first preset coordinate value and the second preset coordinate value as a (x, y, z) position of the target object in the bird's-eye view space, determine the size as length, width and height of the target object in the bird's-eye view space, and determine the orientation angle as a rotation yaw of the target object in the bird's-eye view space. Finally, the 3D spatial information of the target object around a carrier is determined based on the (x, y, z) position, the length, width and height and the orientation angle.

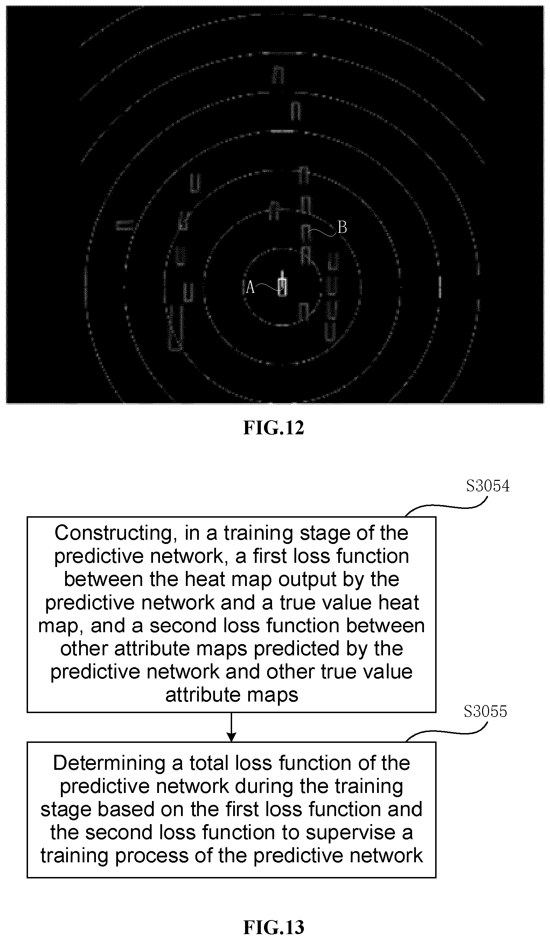

FIG. 12 is a schematic diagram showing output of a predictive network according to an example embodiment of the present disclosure. In FIG. 12, the center A of the smallest circle is a position of the carrier and the box position B around the center is a target object around the carrier.

In addition, the vehicle-mounted automatic driving system may also display a three-dimensional space projection of the target object on the image from the multi-camera view captured by the multi-camera system, so as to for the user intuitively understand the 3D spatial information of the target object from the vehicle-mounted display screen.

As may be seen, in the present embodiment of the present disclosure, a bird's-eye view image can be processed based on a predictive network to obtain a heat map and other attribute maps. The 3D spatial information of the target object may be directly predicted by inputting the bird's-eye view fusion features obtained by feature fusion into the heat map and other attribute maps, thus improving the 3D target detection efficiency.

FIG. 13 is another flow diagram showing target detection according to an example embodiment of the present disclosure.

As shown in FIG. 13, according to the above-mentioned embodiment shown in FIG. 11, step S305 may further include the following steps:

S3054: Constructing, in a training stage of the predictive network, a first loss function between the heat map output by the predictive network and a true value heat map, and a second loss function between other attribute maps predicted by the predictive network and other true value attribute maps.

In an embodiment, the vehicle-mounted automatic driving system may separately construct a Gaussian kernel for each target object based on the position of each target object of the fusion feature from a bird's-eye view.

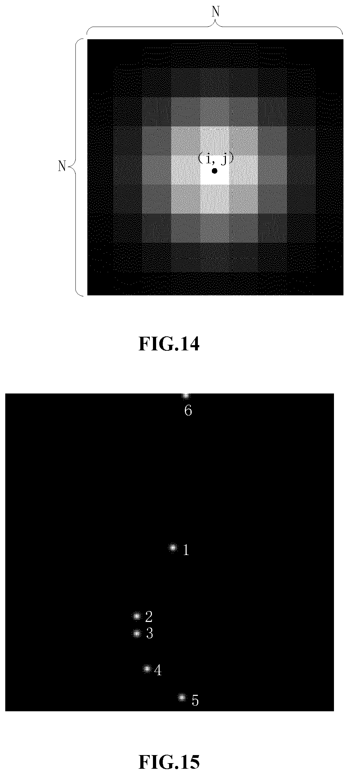

FIG. 14 is a schematic diagram showing a Gaussian kernel according to an example embodiment of the present disclosure. As shown in FIG. 14, in constructing the Gaussian kernel, one N×N-sized Gaussian kernel may be generated centering on the position (i, j) of the target object, wherein a value of the center of the Gaussian kernel is 1, the value at the periphery decays down to 0, and the color from white to black indicates that the value decays from 1 to 0.

FIG. 15 is a schematic diagram showing a heat map according to an example embodiment of the present disclosure. As shown in FIG. 15, the Gaussian kernel of each target object may be placed on the heat map to obtain a true value heat map. In FIG. 15, each white region represents one Gaussian kernel, i.e., one target object, such as target objects 1-6.

It should be noted that other generation methods of the true value attribute map may refer to that of the true value heat map and will not be described in detail herein.

After determining the true value heat map, a first loss function may be constructed based on a heat map output by the true value heat map and the predictive network. The first loss function may measure a gap distribution between the output prediction value and the true value of the predictive network for supervising the training process of the predictive network.

in an embodiment, the first loss function $L_{cls}$ may be specifically constructed by the following formula:

$$L_{cls} = -\frac{1}{N}\sum_{i,j=1}^{h,w}\begin{cases}(1-y_{i,j})^{\alpha}\log(y_{i,j}) & if\ y\prime_{i,j}=1\\ (1-y\prime_{i,j})^{\beta}(y_{i,j})^{\alpha}\log(1-y_{i,j}) & Otherwise\end{cases};$$

wherein $y\prime_{i,j}$ represents a first preset coordinate value of (i, j) position in a true value heat map, 1 represents a peak value in the heat map, $y_{i,j}$ represents the first preset coordinate value of the (i, j) position in the heat map predicted by the predictive network, each of $\alpha$ and $\beta$ is an adjustable hyperparameter, and both $\alpha$ and $\beta$ range from 0 to 1, N represents the sum of the number of target objects in the bird's-eye view fusion feature, and h, w represents the size of the bird's-eye view fusion feature.

In an embodiment, the second loss function $L_{reg}$ may be specifically constructed by the following formula:

$$L_{reg} = \frac{1}{N}\parallel B' - B\parallel;$$

wherein B' is a true value of a second preset coordinate value, a size and an orientation angle of a target object in a bird's-eye view coordinate system, B is a predicted value of the second preset coordinate value, the size and the orientation angle of the target object in the bird's-eye view coordinate system predicted by the predictive network, and N represents the number of the target objects in the bird's-eye view fusion feature.

Step S3055: Determining a total loss function of the predictive network during the training stage based on the first loss function and the second loss function to supervise a training process of the predictive network.

In an embodiment, the total loss function of the predictive network during the training stage may be determined by the following steps:

acquiring a weight value of the first loss function and a weight value of the second loss function; and
determining, based on the first loss function, the weight value of the first loss function, the second loss function, and the weight value of the second loss function, a total loss function of the predictive network during the training stage.

Here, when predicting the 3D spatial information of the target object using the predictive network, different attributes are attached different importance in the training process, so that the corresponding loss function is attached different importance. Therefore, different weight values are assigned to the loss functions corresponding to different attributes according to the importance of the training process for different attributes.

The total loss function $L_{3d}$ of the predictive network during the training stage may be determined by the following formula:

$$L_{3d} = \lambda_1 L_{cls} + \lambda_2 L_{reg};$$

wherein $L_{cls}$ is a first loss function, $L_{reg}$ is a second loss function, $\lambda_1$ is a weight value of the first loss function, and $\lambda_2$ is a weight value of the second loss function. Both $\lambda_1$ and $\lambda_2$ are between 0-1, $\lambda_1 > \lambda_2$, and $\lambda_1 + \lambda_2 = 1$.

It may be seen that in the embodiment of the present disclosure, when training the predictive network, a total loss function is constructed to supervise the total training process to ensure that output of various attributes of the predictive network is increasingly accurate, thereby ensuring that 3D target detection efficiency is higher.

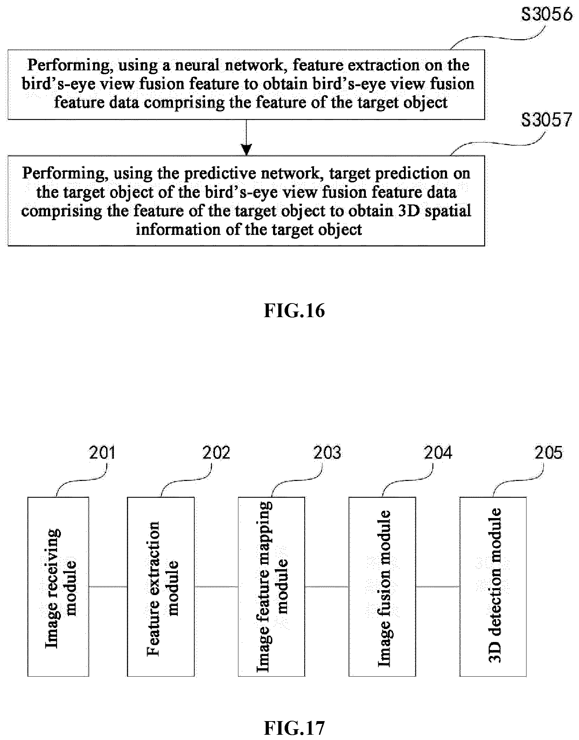

FIG. 16 is yet another flow chart of target detection according to an example embodiment of the present disclosure.

As shown in FIG. 16, according to the above-mentioned embodiment shown in FIG. 3, step S305 may further include the following steps:

Step S3056: Performing, using a neural network, feature extraction on the bird's-eye view fusion feature to obtain bird's-eye view fusion feature data comprising the feature of the target object.

In an embodiment, the vehicle-mounted automatic driving system may perform convolution and other calculations on the bird's-eye view fusion features using a neural network to realize feature extraction so as to obtain bird's-eye view fusion feature data. The bird's-eye view fusion feature data includes a feature of the target object for characterizing different dimensions of the target object, i.e., scene information of the target object from different dimensions in the bird's-eye view space.

The neural network may be a pre-trained neural network for feature extraction. Alternatively, the neural network used for feature extraction is not limited to a particular network result, such as: resnet, densenet, mobilenet, etc.

Step S3057: Performing, using the predictive network, target prediction on the target object of the bird's-eye view fusion feature data comprising the feature of the target object to obtain 3D spatial information of the target object.

It may be seen that in the embodiment of the present disclosure, feature extraction is performed on the bird's-eye view fusion feature to obtain bird's-eye view fusion feature data before training the bird's-eye view fusion feature through a predictive network. Then the bird's-eye view fusion feature data comprising the feature of the target object is predicted using the predictive network, so that the prediction result is more accurate, i.e., the determined 3D spatial information of the target object is more accurate.

Based on the above-mentioned embodiment shown in FIG. 3, step S302 may include the following step:

performing, using a depth neural network, convolution calculation on images corresponding to respective views, to obtain feature data of a plurality of different resolutions respectively corresponding to the images of respective views in the multi-camera view space, wherein the feature data comprises a feature of a target object.

Here, the depth neural network may be a pre-trained neural network for feature extraction. Alternatively, the neural network used for feature extraction is not limited to a particular network result, such as: resnet, densenet, mobilenet, etc. The depth neural network is used to perform convolution, pooling and other calculations on the image of the target view, and a plurality of feature data of different resolutions (scales) corresponding to the image of the target view may be obtained.

For example, the size of image A at a certain view is H×W×3, wherein H is height of image A, W is width of image A, and 3 indicates that there are 3 channels. For example, if it is an RGB image, 3 represents 3 channels of RGB (R-Red, G-Green, B-Blue); if it is a YUV image, 3 indicates 3 channels of YUV (Y-Luminance signal, U-Blue component signal, V-Red component signal). The image A is input into a depth neural network, and a feature matrix of dimension H1×W1×N is output after the depth neural network performs convolution, etc., wherein H1 and W1 are the height and width of the feature (usually smaller than H and W, N is the number of channels, and N is greater than 3). By means of neural network fitting training on the input data, feature data of a plurality of different resolutions of the input image including features of the target object may be obtained, such as low-level image texture, edge contour information and high-level semantic information corresponding to different resolutions, etc. After obtaining the feature data of the image of each view, subsequent spatial transform, multi-view feature fusion and target prediction steps may be performed to obtain the 3D spatial information of the target object.

It may be seen that in the embodiment of the present disclosure convolution, pooling, and other calculations are performed on the images corresponding to respective views through a depth neural network so as to obtain feature data of a plurality of different resolutions of each view image. The feature data with different resolutions may better reflect the image feature captured by the corresponding view camera, and improve the efficiency of subsequent 3D target detection.

Example apparatus

FIG. 17 is a block diagram showing a 3D target detection apparatus based on multi-view fusion according to an example embodiment of the present disclosure. The 3D target detection apparatus based on multi-view fusion may be provided in an electronic device such as a terminal device, a server, or the like, or on an aided driving or automatic driving carrier, and illustratively may be provided in a vehicle-mounted automatic driving system to perform the 3D target detection method based on multi-view fusion according to any one of the embodiments of the present disclosure. As shown in FIG. 17, the 3D target detection apparatus based on multi-view fusion of the present embodiment includes: an image receiving module 201, a feature extraction module 202, an image feature mapping module 203, an image fusion module 204, and a 3D detection module 205.

The image receiving module 201 is configured to acquire at least one image captured from a multi-camera view.

The feature extraction module 202 is configured to perform feature extraction on the at least one image acquired by the image receiving module to obtain respective feature data corresponding to the at least one image in a multi-camera view space, wherein the feature data comprises a feature of a target object;

an image feature mapping module 203 is configured to map, based on internal parameters and vehicle parameters of a multi-camera system, the respective feature data corresponding to the at least one image in the multi-camera view space obtained by the feature extraction module to a same bird's-eye view space so as to obtain respective feature data corresponding to the at least one image in the bird's-eye view space.

The image fusion module 204 is configured to perform feature fusion on the respective feature data corresponding to the at least one image in the bird's-eye view space obtained by the image feature mapping module to obtain a bird's-eye view fusion feature.

The 3D detection module 205 is configured to perform target prediction on the target object of the bird's-eye view fusion feature obtained by the image fusion module to obtain 3D spatial information of the target object.

It may be seen that according to the apparatus of the embodiments of the present disclosure, when 3D target detection based on multi-view fusion is performed, feature data of at least one image from a multi-camera view is mapped to the same bird's-eye view space at the same time through middle fusion, so that more reasonable and better fusion may be performed. At the same time, the 3D spatial information of each target object in the vehicle-mounted environment is directly detected in the bird's-eye view space by the fused bird's-eye view fusion feature. Accordingly, when 3D target detection based on multi-view fusion is performed by means of the apparatus of the embodiments of the present disclosure, 3D detection for a scene object under a bird's-eye view is completed end-to-end, thereby avoiding a post-processing stage on conventional multi-view 3D target detection and improving detection efficiency.

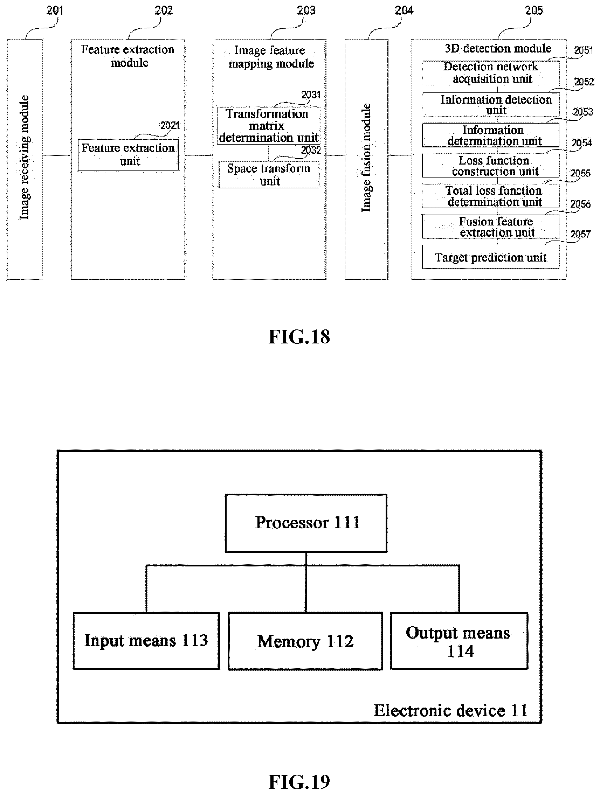

FIG. 18 is another structural diagram showing a 3D target detection apparatus based on multi-view fusion according to an example embodiment of the present disclosure.

Further, in a structural diagram as shown in FIG. 18, the image feature mapping module 203 includes:

a transformation matrix determination unit 2031 for determining, based on internal parameters and vehicle parameters of the multi-camera system, a transformation matrix of multi-camera of the multi-camera system from a camera coordinate system to a bird's-eye view coordinate system; and

a space transform unit 2032 for transforming, based on the transformation matrix from the camera coordinate system of the multi-camera to the bird's-eye view coordinate system, the respective feature data corresponding to the at least one image in the multi-camera view space from the multi-camera view space to the bird's-eye view space to obtain the respective feature data corresponding to the at least one image in the bird's-eye view space.

In a possible embodiment, the transformation matrix determination unit 2031 includes:

a transformation matrix acquisition subunit for acquiring internal parameters of a camera and external parameters of a camera of the multi-camera in the multi-camera system, respectively, and acquiring a transformation matrix from a vehicle coordinate system to the bird's-eye view coordinate system; and

a transformation matrix determination subunit for determining, based on the external parameters of the camera and the internal parameters of the camera of the multi-camera acquired by the transformation matrix acquisition subunit, and the transformation matrix from the vehicle coordinate system to the bird's-eye view coordinate system, a transformation matrix from the camera coordinate system of the multi-camera to the bird's-eye view coordinate system.

Further, the 3D detection module 205 includes:

a detection network acquisition unit 2051 for acquiring, using a predictive network, a heat map for determining a first preset coordinate value of the target object in a bird's-eye view coordinate system, and acquiring other attribute maps for determining a second preset coordinate value, a size and an orientation angle of the target object in the bird's-eye view coordinate system from the bird's-eye view fusion feature;
an information detection unit 2052 for determining the first preset coordinate value of the target object in the bird's-eye view coordinate system based on peak information in the heat map acquired by the detection network acquisition unit 2051, and determining the second preset coordinate value, the size and the orientation angle of the target object in the bird's-eye view coordinate from the other attribute maps based on the first preset coordinate value of the target object in the bird's-eye view coordinate system; and
an information determination unit 2053 for determining 3D spatial information of the target object based on the first preset coordinate value, the second preset coordinate value, the size and the orientation angle of the target object in the bird's-eye view coordinate system detected by the information detection unit 2052.

In one possible embodiment, the 3D detection module 205 further includes:

a loss function construction unit 2054 for constructing, in a training stage of the predictive network, a first loss function between the heat map predicted by the predictive network and a true value heat map, and a second loss function between the other attribute maps predicted by the predictive network and other true value attribute maps;
a total loss function determination unit 2055 for determining a total loss function of the predictive network during the training stage based on the first loss function and the second loss function constructed by the loss function construction unit 2054 to supervise a training process of the predictive network.

In a possible embodiment, the total loss function determination unit 2055 includes:

a weight value acquisition subunit for acquiring a weight value of the first loss function and a weight value of the second loss function;
a total loss function determination subunit for determining, based on the first loss function and the second loss function constructed by the loss function construction unit 2054, and the weight value of the first loss function and the weight value of the second loss function acquired by the weight value acquisition subunit, a total loss function of a predictive network in a training stage.

In one possible embodiment, the 3D detection module 205 further includes:

a fusion feature extraction unit 2056 for performing, using a neural network, feature extraction on the bird's-eye view fusion feature to obtain bird's-eye view fusion feature data comprising the feature of the target object; and
a target prediction unit 2057 for performing, using the predictive network, target prediction on the target object of the bird's-eye view fusion feature data comprising the feature of the target object that is obtained by the feature extraction unit 2056 to obtain 3D spatial information of the target object.

Further, the feature extraction module 202 includes:
a feature extraction unit 2021 for performing, using a depth neural network, convolution calculation on images corresponding to respective views, to obtain feature data of a plurality of different resolutions respectively corresponding to the images of respective views in the multi-camera view space, wherein the feature data comprises a feature of a target object.

Example electronic device

Hereinafter, an electronic device according to an embodiment of the present disclosure will be described with reference to FIG. 19.
FIG. 19 is a block structural diagram showing an electronic device according to an example embodiment of the present disclosure.

As shown in FIG. 19, the electronic device 11 includes one or more processors 111 and a memory 112.

The processor 111 may be a central processing unit (CPU) or other form of processing unit having data processing capabilities and/or instruction execution capabilities, and may control other components in the electronic device 11 to perform desired functions.

The memory 112 may include one or more computer program products, which may include various forms of computer-readable storage media, such as volatile memory and/or non-volatile memory. The volatile memory may for example include a random-access memory (RAM) and/or a cache memory (cache) etc. The non-volatile memory may include, for example, a read only memory (ROM), a hard disk, a flash memory, etc. One or more computer program instructions may be stored on the computer-readable storage medium, and the processor 111 may execute the program instructions to implement the 3D target detection method based on multi-view fusion and/or other desired functionality of the various embodiments of the present disclosure described above. Various contents such as an input signal, a signal component, a noise component, etc. may also be stored in the computer-readable storage medium.

In one example, the electronic device 11 may further include: input means 113 and output means 114, which are interconnected by a bus system and/or other form of connection mechanism (not shown).

In addition, the input means 113 may include, for example, a keyboard, a mouse, etc.

The output means 114 may output various information to the outside, including determined distance information, direction information, etc. The output means 114 may include, for example, a display, speakers, a printer, a communications network and its connected remote output devices, etc.

Of course, for simplicity, only some of the components of the electronic device 11 relevant to the present disclosure are shown in FIG. 20, omitting components such as buses, input/output interfaces, etc. In addition, the electronic device 11 may include any other suitable components depending on the particular application.

Example computer program product and computer-readable storage medium

In addition to the methods and device described above, according to the embodiment of the present disclosure there may also be provided a computer program product including computer program instructions which, when executed by a processor, cause the processor to perform steps in a 3D target detection method based on multi-view fusion according to various embodiments of the present disclosure as described in the "example methods" section above of this specification.

Furthermore, according to embodiments of the present disclosure, there may also be provided a computer-readable storage medium having stored thereon computer program instructions which, when executed by a processor, cause the processor to perform steps in a 3D target detection method based on multi-view fusion according to various embodiments of the present disclosure as described in the "example methods" section above of this specification.

The general principles of the present disclosure have been described above in conjunction with specific embodiments, however, it is to be noted that the advantages, superiorities, effects, etc. mentioned in the present disclosure are merely example and not limiting, and such advantages, superiorities, effects, etc. should not be construed as being required by the various embodiments of the present disclosure. Furthermore, the particular details disclosed above are for purposes of illustration and description only and are not intended to be limiting, as the present disclosure is not limited to the particular details disclosed above.

The block diagrams of components, apparatuses, devices, and systems referred to in the present disclosure are merely illustrative examples and are not intended to require or imply that the connections, arrangements, and configurations shown in the block diagrams are required. The components, apparatuses, devices, systems may be connected, arranged, configured in any manner, as will be appreciated by a person skilled in the art. Words such as "comprise", "include", "have", and the like are open-ended words that mean "including, but not limited to", and are used interchangeably. The words "or" and "and" as used herein refer to the word "and/or" and may be used interchangeably therewith unless the context clearly indicates otherwise. As used herein, the word "such as" refers to and is used interchangeably with the phrase "such as, but not limited to".

It should also be noted that in the apparatus, devices and methods of the present disclosure, the components or steps may be decomposed and/or recombined. Such decomposition and/or recombination should be considered as equivalents of the present disclosure.

**Claims**

1. A 3D target detection method based on multi-view fusion, comprising:

    acquiring at least one image captured from a multi-camera view;
    performing feature extraction on the at least one image to obtain respective feature data corresponding to the at least one image in a multi-camera view space, wherein the feature data comprises a feature of a target object; mapping, based on internal parameters and vehicle parameters of a multi-camera system, the respective feature data corresponding to the at least one image in the multi-camera view space to a same bird's-eye view space so as to obtain respective feature data corresponding to the at least one image in the bird's-eye view space; performing feature fusion on the respective feature data corresponding to the at least one image in the bird's-eye view space to obtain a bird's-eye view fusion feature; and performing target prediction on the target object of the bird's-eye view fusion feature to obtain 3D spatial information of the target object.

2. The method according to claim 1, wherein the mapping, based on internal parameters and vehicle parameters of a multi-camera system, the respective feature data corresponding to the at least one image in the multi-camera view space to a same bird's-eye view space so as to obtain respective feature data corresponding to the at least one image in the bird's-eye view space comprises:

   determining, based on the internal parameters and vehicle parameters of the multi-camera system, a transformation matrix of multi-camera of the multi-camera system from a camera coordinate system to a bird's-eye view coordinate system; and
   transforming, based on the transformation matrix from the camera coordinate system of the multi-camera to the bird's-eye view coordinate system, the respective feature data corresponding to the at least one image in the multi-camera view space from the multi-camera view space to the bird's-eye view space to obtain the respective feature data corresponding to the at least one image in the bird's-eye view space.

3. The method according to claim 2, wherein the determining, based on the internal parameters and vehicle parameters of the multi-camera system, a transformation matrix of multi-camera of the multi-camera system from a camera coordinate system to a bird's-eye view coordinate system comprises:

   acquiring internal parameters of a camera and external parameters of a camera of the multi-camera in the multi-camera system, respectively, and acquiring a transformation matrix from a vehicle coordinate system to the bird's-eye view coordinate system; and
   determining, based on the external parameters of the camera and the internal parameters of the camera of the multi-camera, and the transformation matrix from the vehicle coordinate system to the bird's-eye view coordinate system, a transformation matrix from the camera coordinate system of the multi-camera to the bird's-eye view coordinate system.

4. The method according to claim 1, wherein the performing target prediction on the target object of the bird's-eye view fusion feature to obtain 3D spatial information of the target object comprises:

   Acquiring, using a predictive network, a heat map for determining a first preset coordinate value of the target object in a bird's-eye view coordinate system, and acquiring other attribute maps for determining a second preset coordinate value, a size and an orientation angle of the target object in the bird's-eye view coordinate system from the bird's-eye view fusion feature;
   determining the first preset coordinate value of the target object in the bird's-eye view coordinate system based on peak information in the heat map, and determining the second preset coordinate value, the size and the orientation angle of the target object in the bird's-eye view coordinate from the other attribute maps based on the first preset coordinate value of the target object in the bird's-eye view coordinate system; and
   determining 3D spatial information of the target object based on the first preset coordinate value, the second preset coordinate value, the size and the orientation angle of the target object in the bird's-eye view coordinate system.

5. The method according to claim 4, further comprising:

   constructing, in a training stage of the predictive network, a first loss function between the heat map predicted by the predictive network and a true value heat map, and a second loss function between the other attribute maps predicted by the predictive network and other true value attribute maps; and
   determining a total loss function of the predictive network during the training stage based on the first loss function and the second loss function to supervise a training process of the predictive network.

6. The method according to claim 5, wherein the determining the total loss function of the predictive network during the training stage based on the first loss function and the second loss function comprises:

> acquiring a weight value of the first loss function and a weight value of the second loss function; and
> determining, based on the first loss function, the weight value of the first loss function, the second loss function, and the weight value of the second loss function, a total loss function of the predictive network during the training stage.

7. The method according to claim 1 or 4, wherein the performing target prediction on the target object of the bird's-eye view fusion feature to obtain 3D spatial information of the target object comprises:

> performing, using a neural network, feature extraction on the bird's-eye view fusion feature to obtain bird's-eye view fusion feature data comprising the feature of the target object; and
> performing, using a predictive network, target prediction on the target object of the bird's-eye view fusion feature data comprising the feature of the target object to obtain 3D spatial information of the target object.

8. The method according to claim 1, wherein the performing feature extraction on the at least one image to obtain respective feature data corresponding to the at least one image in a multi-camera view space, wherein the feature data comprises a feature of a target object comprises:
performing, using a depth neural network, convolution calculation on images corresponding to respective views, to obtain feature data of a plurality of different resolutions respectively corresponding to the images of respective views in the multi-camera view space, wherein the feature data comprises a feature of a target object.

9. A 3D target detection apparatus based on multi-view fusion, comprising:

> an image receiving module configured to acquire at least one image captured from a multi-camera view;
> a feature extraction module configured to perform feature extraction on the at least one image acquired by the image receiving module to obtain respective feature data corresponding to the at least one image in a multi-camera view space, wherein the feature data comprises a feature of a target object;
> an image feature mapping module configured to map, based on internal parameters and vehicle parameters of a multi-camera system, the respective feature data corresponding to the at least one image in the multi-camera view space obtained by the feature extraction module to a same bird's-eye view space so as to obtain respective feature data corresponding to the at least one image in the bird's-eye view space;
> an image fusion module configured to perform feature fusion on the respective feature data corresponding to the at least one image in the bird's-eye view space obtained by the image feature mapping module to obtain a bird's-eye view fusion feature; and
> a 3D detection module configured to perform target prediction on the target object of the bird's-eye view fusion feature obtained by the image fusion module to obtain 43D spatial information of the target object.

10. A computer-readable storage medium storing a computer program thereon for executing the 3D target detection method based on multi-view fusion according to any one of claims 1-8.

11. An electronic device, comprising:

> a processor;
> a memory for storing the processor-executable instruction;
> wherein the processor is configured to read the executable instruction from the memory and execute the instruction to implement the 3D target detection method based on multi-view fusion according to any one of claims 1-8.

100

200

300

Vehicle-mounted automatic driving system

Multi-camera system

**FIG.1**

200

201

Image receiving module

202

Feature extraction module

203

Image feature mapping module

204

Image fusion module

205

3D detection module

**FIG.2**

S301

Acquiring at least one image captured from a multi-camera view

S302

Performing feature extraction on the at least one image to obtain respective feature data corresponding to the at least one image in a multi-camera view space, wherein the feature data comprises a feature of a target object

S303

Mapping, based on internal parameters and vehicle parameters of a multi-camera system, the respective feature data corresponding to the at least one image in the multi-camera view space to a same bird's-eye view space so as to obtain respective feature data corresponding to the at least one image in the bird's-eye view space

S304

Performing feature fusion on the respective feature data corresponding to the at least one image in the bird's-eye view space to obtain a bird's-eye view fusion feature

S305

Performing target prediction on the target object of the bird's-eye view fusion feature to obtain 3D spatial information of the target object

**FIG.3**

300

Multi-camera system

Image 1

Image 2

⋮

Image N

**FIG.4**

| (1) Front view | (2) Front left view | (3) Front right view |
| (4) Rear view | (5) Rear left view | (6) Rear right view |

**FIG.5**

**FIG.6**

Inputting images captured by a multi-camera system — Feature extraction — Feature data — Mapping feature data to bird's-eye view space and performing fusion — Bird's-eye view image

**FIG.7**

Bird's-eye view fusion feature → 3D detection module 205 → Position / Size / Orientation angle

**FIG.8**

S3031

Determining, based on the internal parameters and vehicle parameters of the multi-camera system, a transformation matrix of multi-camera of the multi-camera system from a camera coordinate system to a bird's-eye view coordinate system

S3032

Transforming, based on the transformation matrix from the camera coordinate system of the multi-camera to the bird's-eye view coordinate system, the respective feature data corresponding to the at least one image in the multi-camera view space from the multi-camera view space to the bird's-eye view space to obtain the respective feature data corresponding to the at least one image in the bird's-eye view space

FIG.9

S3031

Obtaining transformation matrix

S302

Inputting feature data

S3032

Transforming feature space

S304

Multi-view feature fusion

FIG.10

S3051

Acquiring, using a predictive network, a heat map for determining a first preset coordinate value of the target object in a bird's-eye view coordinate system, and acquiring other attribute maps for determining a second preset coordinate value, a size and an orientation angle of the target object in the bird's-eye view coordinate system from the bird's-eye view fusion feature

S3052

Determining the first preset coordinate value of the target object in the bird's-eye view coordinate system based on peak information in the heat map, and determining the second preset coordinate value, the size and the orientation angle of the target object in the bird's-eye view coordinate from the other attribute maps based on the first preset coordinate value of the target object in the bird's-eye view coordinate system

S3053

Determining 3D spatial information of the target object based on the first preset coordinate value, the second preset coordinate value, the size and the orientation angle of the target object in the bird's-eye view coordinate system

**FIG.11**

**FIG.12**

S3054

Constructing, in a training stage of the predictive network, a first loss function between the heat map output by the predictive network and a true value heat map, and a second loss function between other attribute maps predicted by the predictive network and other true value attribute maps

S3055

Determining a total loss function of the predictive network during the training stage based on the first loss function and the second loss function to supervise a training process of the predictive network

**FIG.13**

**FIG.14**

**FIG.15**

S3056

Performing, using a neural network, feature extraction on the bird's-eye view fusion feature to obtain bird's-eye view fusion feature data comprising the feature of the target object

S3057

Performing, using the predictive network, target prediction on the target object of the bird's-eye view fusion feature data comprising the feature of the target object to obtain 3D spatial information of the target object

**FIG.16**

201        202        203        204        205

| Image receiving module | Feature extraction module | Image feature mapping module | Image fusion module | 3D detection module |

**FIG.17**

201　　　　　202　　　　　　　203　　　　204　　　　　　205

| Image receiving module | Feature extraction module | Image feature mapping module | Image fusion module | 3D detection module |

Feature extraction unit 2021

Transformation matrix determination unit 2031

Space transform unit 2032

3D detection module — 2051

Detection network acquisition unit — 2052

Information detection unit — 2053

Information determination unit — 2054

Loss function construction unit — 2055

Total loss function determination unit — 2056

Fusion feature extraction unit — 2057

Target prediction unit

**FIG.18**

Processor 111

Input means 113

Memory 112

Output means 114

Electronic device 11

**FIG.19**

## INTERNATIONAL SEARCH REPORT

| International application No. |
|---|
| **PCT/CN2023/074861** |

### A. CLASSIFICATION OF SUBJECT MATTER

G06V20/58(2022.01)i;G06V20/64(2022.01)i;G06V10/80(2022.01)i;G06T7/73(2017.01)i

According to International Patent Classification (IPC) or to both national classification and IPC

### B. FIELDS SEARCHED

Minimum documentation searched (classification system followed by classification symbols)

IPC: G06V G06T

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 多视角, 特征, 融合, 三维, 目标, 检测, 内参, 外参, 鸟瞰, 空间, 映射, 投影, multi-viewer, feature, fusion, 3D, object, detection, internal parameter, external parameter, aerial view, space, projection

### C. DOCUMENTS CONSIDERED TO BE RELEVANT

| Category* | Citation of document, with indication, where appropriate, of the relevant passages | Relevant to claim No. |
|---|---|---|
| PX | CN 114913506 A (BEIJING HORIZON ROBOTICS TECHNOLOGY RESEARCH AND DEVELOPMENT CO., LTD.) 16 August 2022 (2022-08-16) claims 1-11, and description, paragraphs [0006]-[0208] | 1-11 |
| X | CN 113673425 A (TSINGHUA UNIVERSITY) 19 November 2021 (2021-11-19) description, paragraphs [0005]-[0094] | 1-11 |
| A | CN 111476822 A (ZHEJIANG UNIVERSITY) 31 July 2020 (2020-07-31) description, paragraphs [0007]-[0145] | 1-11 |
| A | CN 114419568 A (NORTHEASTERN UNIVERSITY) 29 April 2022 (2022-04-29) description, paragraphs [0007]-[0068] | 1-11 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2023** | **06 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/074861**

| Patent document cited in search report | | | Publication date (day/month/year) | Patent family member(s) | | | Publication date (day/month/year) |
|---|---|---|---|---|---|---|---|
| CN | 114913506 | A | 16 August 2022 | None | | | |
| CN | 113673425 | A | 19 November 2021 | CN | 113673425 | B | 15 March 2022 |
| CN | 111476822 | A | 31 July 2020 | None | | | |
| CN | 114419568 | A | 29 April 2022 | None | | | |

Form PCT/ISA/210 (patent family annex) (July 2022)

**REFERENCES CITED IN THE DESCRIPTION**

**Patent documents cited in the description**

- CN 202210544237